# EUROPEAN PATENT APPLICATION

(11) **EP 0 955 124 A2**
(43) Date of publication of application: **10.11.1999**
(21) Application number: 99303594.8
(22) Date of filing: 07.05.1999
(51) Int. Cl.: B23Q 3/00

(54) **Fence for a power tool**

(30) Priority: 08.05.1998 US 74672; 23.11.1998 US 197634
(71) Applicant: Black & Decker Inc., Newark Delaware 19711 (US)
(72) Inventor: Parks, James, Timonium, Maryland 21093 (US); Stumpf, William, Kingsville, Maryland (US); Huston, Todd, Lutherville, Maryland 21093 (US); Livingstone, Scott, Catonsville, Maryland (US); Ayala, Adan, Owings Mill, Maryland 21117 (US)
(74) Representative: Dlugosz, Anthony Charles

(57) **Abstract**

A fence for a power tool includes a fence beam (200) having a workpiece supporting surface (200L) and a fence face (300) disposed on the fence beam and having a workpiece supporting surface (300H), wherein the workpiece supporting surface of one of the fence beam and fence face provides a low profile and the workpiece supporting surface of the other of the fence beam and fence face provides a high profile. Preferably, the workpiece supporting surface fence beam provides the low profile, while the workpiece supporting surface of the fence face provides the high profile. The workpiece supporting surface of the fence face may be coplanar with the workpiece supporting surface of the fence beam. Further, the fence face may be rotatably supported by the fence beam.

## Description

This invention relates generally to fences for power tools and more particularly to fence for table saws.

Rip fences have long been used on table saws for providing a fixed guide against which the wood workpiece can be held during the ripping operation. Generally, prior art guides have comprised an elongated fence having two opposed, parallel tall faces that extend across the saw table from the front to the rear. Users then hold the workpiece against the fence face with one or more fingers, then wrap the remaining fingers around the fence face. While pushing the workpiece towards the blade, the users slide the hand along the fence face to ensure accuracy. However, if the workpiece is too short, a user may not be able to comfortably or accurately hold the workpiece and the fence face with one hand. Conversely, if the workpiece is too tall, the user may have the same problem.

This problem is solved using a combination low profile/high profile fence, such as the one described in US Patent No. 4,600,184 ("Ashworth"). FIGS. 1A and 1B basically show a prior art fence. Fence head 101 has a main fence beam 102 disposed on the saw table 100. An extnided fence face 103 is slidably attached to the fence beam 102. In particular, the face 103 has a channel 103 provided within to hold a T-nut or sliding strip 104. The nut or strip 104 is connected to a bolt 105 and knob 106 for securing the face 103 in place.

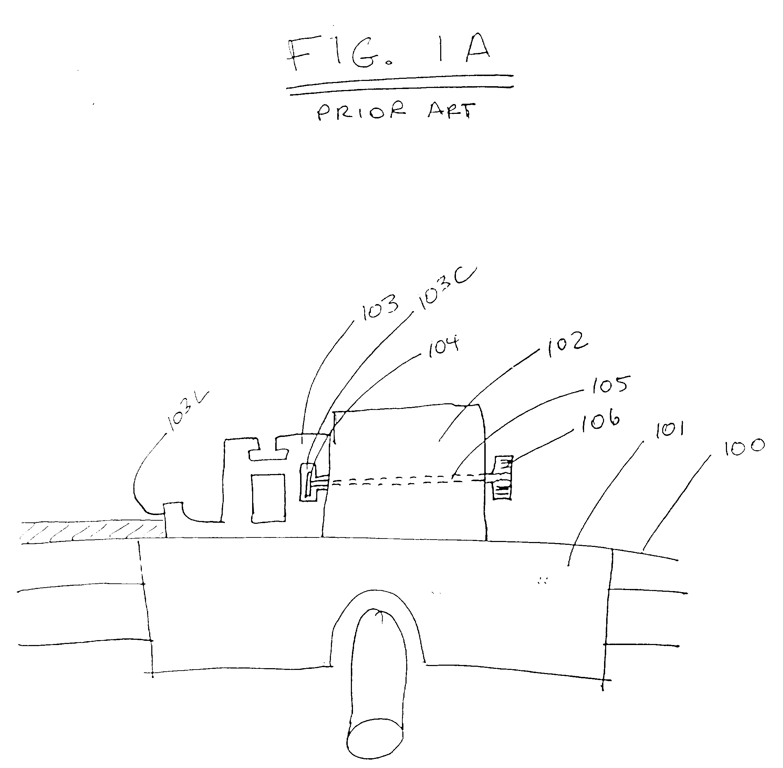

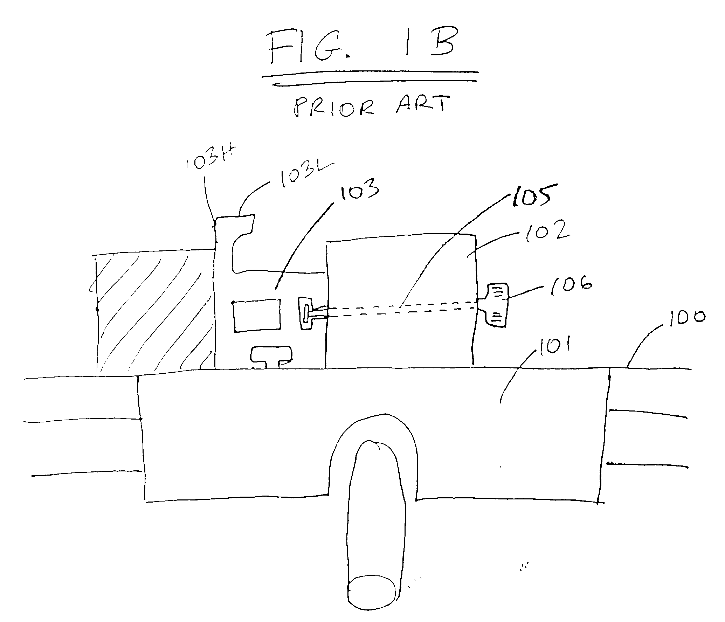

FIG. 1A shows the fence face 103 having a low profile work supporting surface 103L for use with laminates or other short stock. Because of the low profile, the user can easily hold the workpiece and the fence face 103 at the same time. The fence face 103 can also be removed, rotated and reinstalled into a high profile position, i.e., allowing high profile work supporting surface 103H to contact a workpiece, as shown in FIG. 1B, for use with taller stock. This also allows the user can easily hold the workpiece and the fence face 103 at the same time.

However, the common prior art fences are problematic because they require multiple actions to change from the low profile position to the high profile position. For example, in order to move fence extrusion 103 from the position of FIG. 1A to the position of FIG. 1B, the user needs to: (1) unclamp the fence face 103 by turning knob 106; (2) slide fence face 103 off; (3) rotate fence face 103; (4) slide fence face 103 on; and (5) clamp fence face 103 by turning knob 106. This procedure is time consuming and can cause loss of earnings for the user. Also, a user may avoid executing this procedure in order to save time, while risking inaccurate cuts, which may ultimately translate into loss of time, materials and/or profit for the user.

It is an object of this invention to provide a fence which can overcome these prior art problems.

In accordance with the present invention, an improved fence is employed. The fence comprises a fence beam having a workpiece supporting surface and a fence face disposed on the fence beam and having a workpiece supporting surface, wherein the workpiece supporting surface of one of the fence beam and fence face provides a low profile and the workpiece supporting surface of the other of the fence beam and fence face provides a high profilc. Preferably, the workpiece supporting surface fence beam provides the low profile, while the workpiece supporting surface of the fence face provides the high profile. The workpiece supporting surface of the fence face may be coplanar with the workpiece supporting surface of the fence beam. Further, the fence face may be rotatably supported by the fence beam.

Additional features and benefits of the present invention are described, and will be apparent from, the accompanying drawings and the detailed description below.

The accompanying drawings illustrate preferred embodiments of the invention according to the practical application of the principles thereof, and in which:
FIGS. 1A and 1B are front elevational views of a prior art fence;
FIGS. 2A, 2B and 2C are front elevational views of a first and second embodiments of a fence according to the present invention;
FIGS. 3A, 3B and 3C are front elevational views of a third and fourth embodiments of a fence according to the present invention;
FIGS. 4A, 4B and 4C are front elevational views of a fifth and sixth embodiments of a fence according to the present invention;
FIGS. 5A and 5B are front elevational views of a seventh embodiment of a fence according to the present invention; and
FIGS. 6A and 6B are front elevational views of an eight embodiment of a fence according to the present invention.

The invention is now described with reference to the accompanying figures, wherein like numerals designate like parts. In the present specification, a surface having a "low profile" shall mean that the surface will have a height that is ergonomically acceptable for use with laminates and other short stock, i.e., that allows the user to comfortably hold the short stock workpiece and the fence. The preferred height range is below about 2.5 inches with the preferred height being about 0.5 inches.

Conversely, a surface having a "high profile" shall mean that the surface will have a height that is ergonomically acceptable for use with taller stock, i.e., that allows the user to comfortably hold the taller stock workpiece and the fence. The preferred height range is above about 2.5 inches with the preferred height being about 3.5 inches.

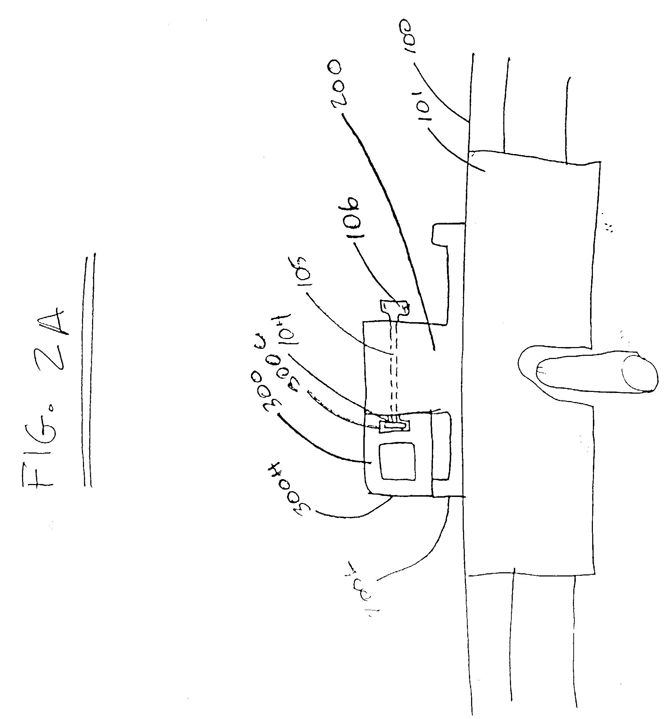

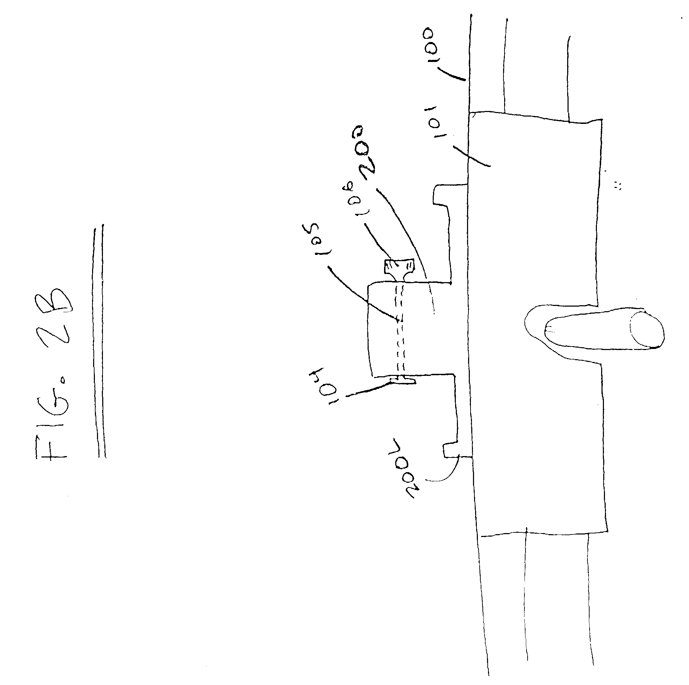

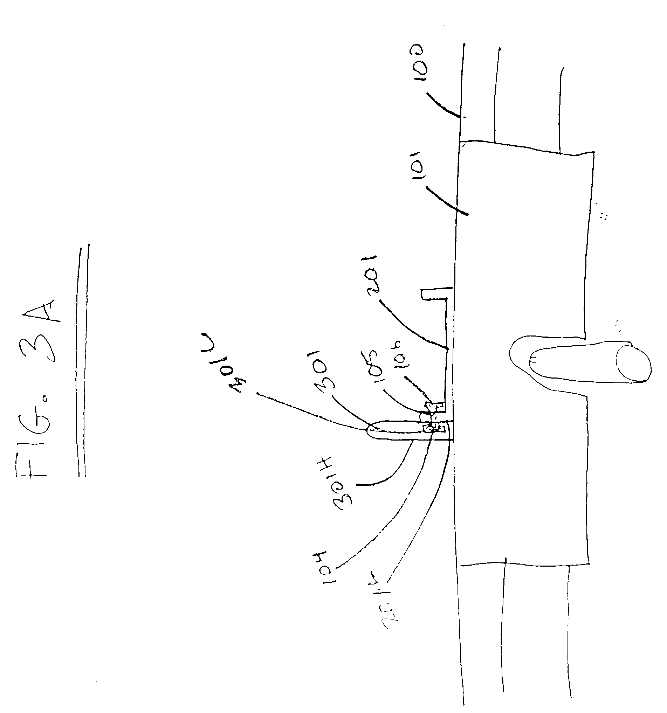

FIGS. 2A and 2B illustrate the first embodiment of the present invention. Referring to FIG. 2A, fence beam 200 has sideward extensions which provide a low profile work supporting surface 200L. A fence face 300 is slidably attachcd to fence beam 200 by the T-strip/screw/knob combination (104, 105, 106) as described above. Preferably, one T-strip 104 connects all bolts 105. The T-strip 104 is disposed within channel 300C of fence face 300.

Fence face 300 has a work supporting surface 300H to provide the high profile. The work supporting surface 300H may combine with the low profile surface 200L to provide a high profile work supporting surface. Preferably, the surfaces 200L and 300H are substantially coplanar. It is preferable to make the channel 300C tall so that the fence face 300, and thus the surface 300H, can be adjusted vertically.

In order to obtain the low profile surface, the user need only remove fence face 300, as shown in FIG. 2B. The user can then easily wrap his fingers around the surface 200L.

It is preferable to make fence beam 200 longitudinally symmetrical, so that both sides of beam 200 have low profile surfaces 200L. Accordingly, a user can take off the face 300 and install it on the other side of the fence beam 200 by removing the bolts 105 and knobs 106 and inserting them from the opposite side. Another advantage of the fence beam 200 is that a user can use face 300 on one side, and the surface 200L on the other side without removing face 300. This advantage is common to most, if not all, the embodiments disclosed below.

FIGS. 2C and 2B illustrate the second embodiment of the present invention. This embodiment is similar to the first embodiment in operation. The main difference is that fence face 306, having a high profile surface 306H which contacts the table 100, rather than contacting beam 200. It is preferable to make the channel 306C tall so that the fence face 306, and thus the surface 306H, can be adjusted vertically. In this manner, the user can lower fence face 306 until it contacts the table 100, leaving no gap therebetween.

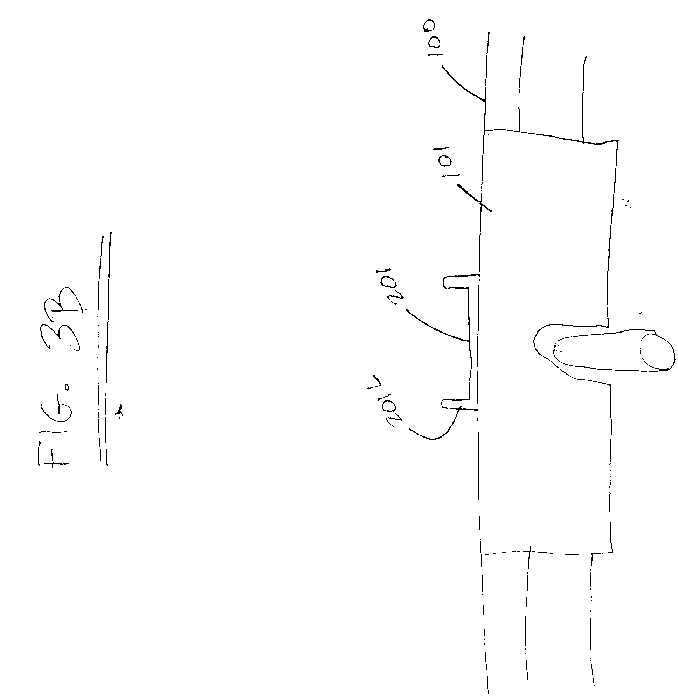

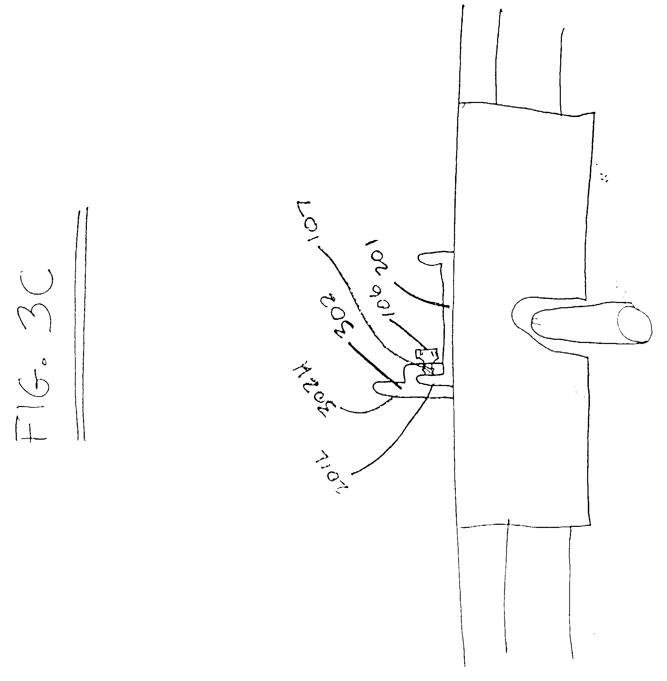

FIGS. 3A and 3B illustrate the third embodiment of the present invention. Referring to FIG. 3A, fence beam 201 has sideward extensions which provide a low profile work supporting surface 201L. A fence face 301 is slidably attached to fence beam 201 by the T-strip/screw/knob combination (104, 105, 106) as described above. Preferably, one T-strip 104 connects all bolts 105. The T-strip 104 is disposed within channel 301C of fence face 301.

Fence face 301 has a work supporting surface 301H to provide the high profile. It is preferable to make the channel 301C tall so that the fence face 301, and thus the surface 301H, can be adjusted vertically. This will allow the user to lower the face 301 until it contacts the table 100, leaving no gap therebetween.

In order to obtain the low profile surface, the user need only remove fence face 301, as shown in FIG. 3B. The user can then easily wrap his fingers around the surface 201L.

It is preferable to make fence beam 201 longitudinally symmetrical, so that both sides of beam 201 have low profile surfaces 201L. Accordingly, a user can take off the face 301 and install it on the other side of the fence beam 201 by removing the bolts 105 and knobs 106 and inserting them from the opposite side.

FIGS. 3C and 3B illustrate the fourth embodiment of the present invention. This embodiment is similar to the second embodiment in operation. The main difference is that fence face 302, having a high profile surface 302H, is slidably attached to fence beam 201 by a screw 107 contacting the beam 201. Preferably, fence face 302 is vertically adjustable so that the user can lower it until it contacts the table 100, leaving no gap therebetween.

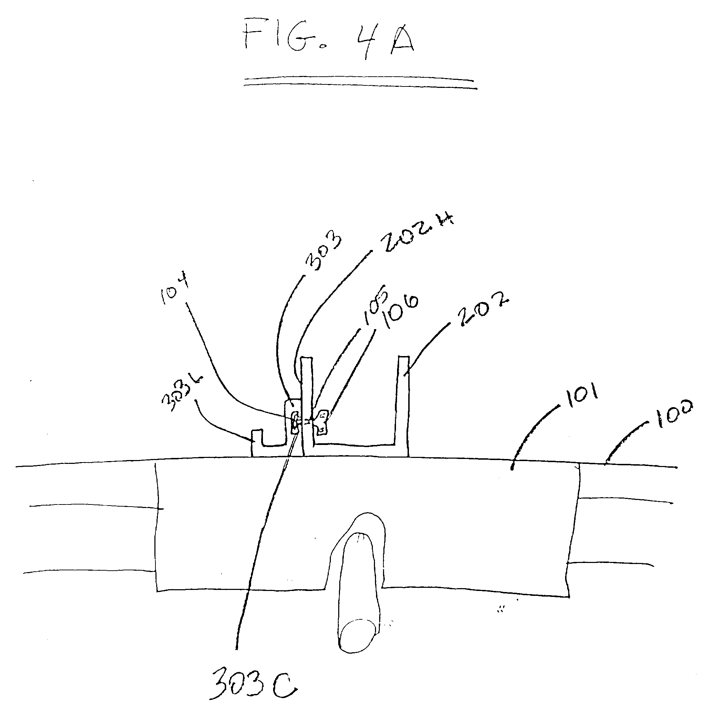

FIGS. 4A and 4C illustrate the fifth embodiment of the present invention. Referring to FIG. 4A, fence beam 202 has sideward extensions which provide a high profile work supporting surface 202H. A fence face 303 is slidably attached to fence beam 202 by the T-strip/screw/knob combination (104, 105, 106) as described above. Preferably, one T-strip 104 connects all bolts 105. The T-strip 104 is disposed within channel 303C of fence face 303.

Fence face 303 has a work supporting surface 303L to provide the low profile. It is preferable to make the channel 303C tall so that the fence face 303, and thus the surface 303L, can be adjusted vertically. This will allow the user to lower the face 303 until it contacts the table 100, leaving no gap therebetween.

In order to obtain the high profile surface, the user need only remove fence face 303, as shown in FIG. 4C. The user can then easily wrap his fingers around the surface 202H.

It is preferable to make fence beam 202 longitudinally symmetrical, so that both sides of beam 202 have high profile surfaces 202H. Accordingly, a user can take off the face 303 and install it on the other side of the fence beam 202 by removing the bolts 105 and knobs 106 and inserting them from the opposite side.

FIGS. 4B and 4C illustrate the sixth embodiment of the present invention. This embodiment is similar to the second embodiment in operation. The main difference is that fence face 304, having a low profile surface 304L, is slidably attached to fence beam 202 by a screw 108 contacting the beam 202. Preferably, fence face 304 is vertically adjustable so that the user can lower it until it contacts the table 100, leaving no gap therebetween.

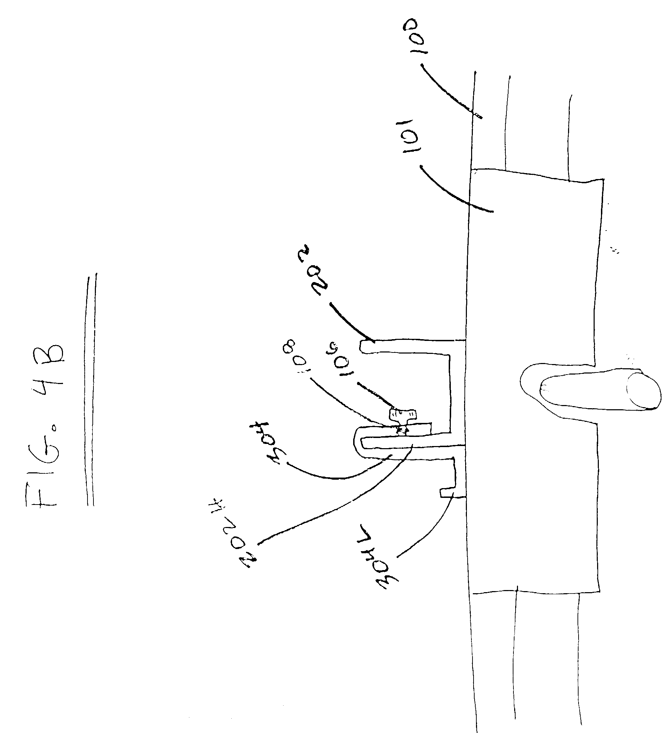

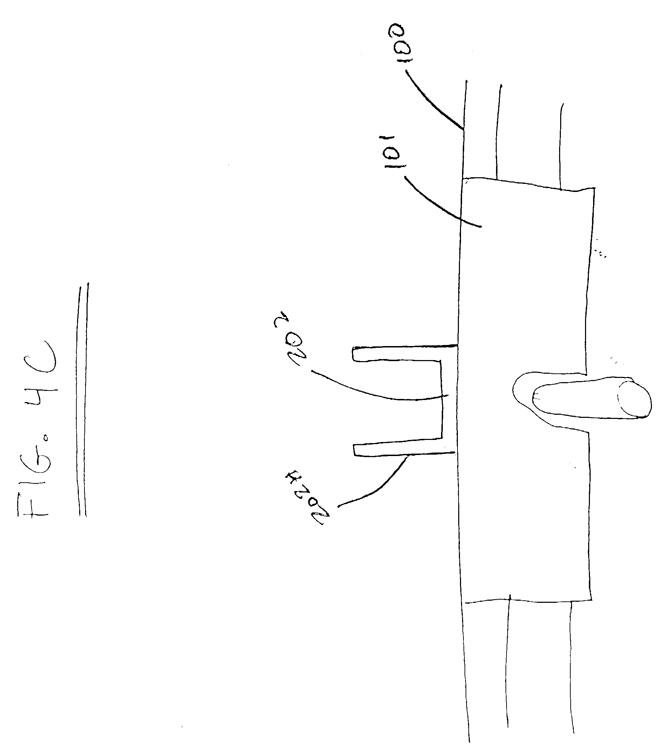

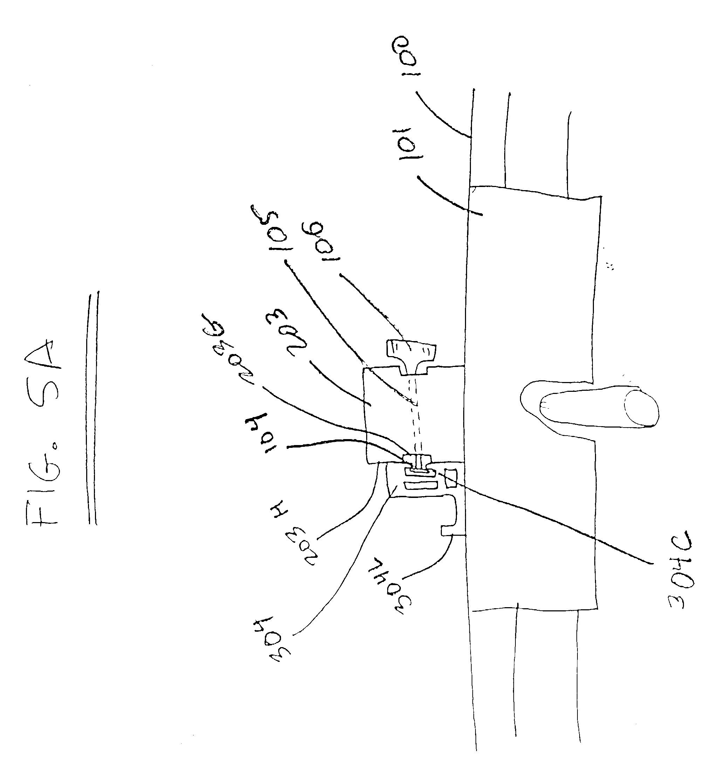

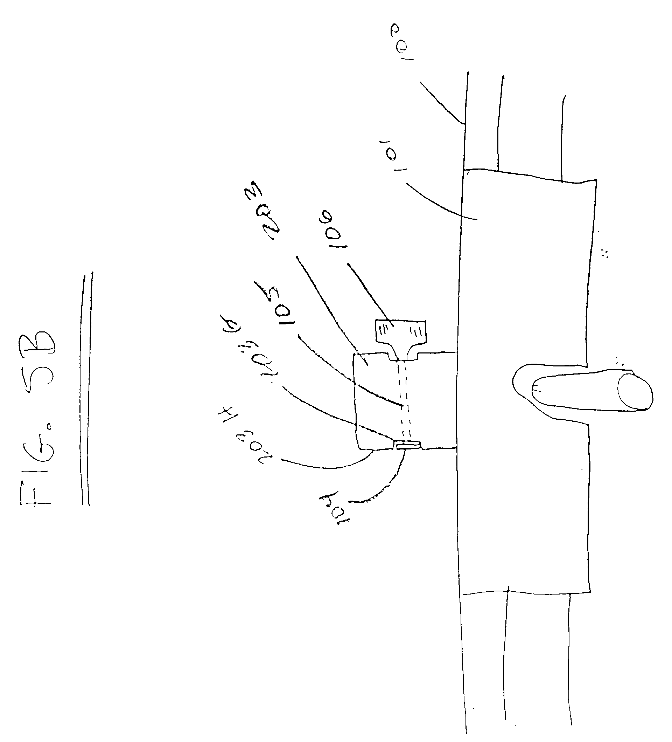

FIGS. 5A and 5B illustrate the seventh embodiment of the present invention. Referring to FIG. 5A, fence beam 203 has sideward extensions which provide a high profile work supporting surface 203H. A fence face 304 is slidably attached to fence beam 203 by the T-strip/screw/knob combination (104, 105, 106) as described above. Preferably, one T-strip 104 connects all bolts 105. The T-strip 104 is disposed within channel 304C of fence face 304.

Fence face 304 has a work supporting surface 304L to provide the low profile. It is preferable to make the channel 304C tall so that the fence face 304, and thus the surface 304L, can be adjusted vertically. This will allow the user to lower the face 304 until it contacts the table 100, leaving no gap therebetween.

In order to obtain the high profile surface, the user need only remove fence face 304, as shown in FIG. 5B. The user can then easily wrap his fingers around the surface 203H. It is preferable to provide a groove 203G on fence beam 203, so that the T-strip 104 will be substantially flush or coplanar with surface 203H.

It is also preferable to make fence beam 203 longitudinally symmetrical, so that both sides of beam 203 have high profile surfaces 203H. Accordingly, a user can take off the face 304 and install it on the other side of the fence beam 203 by removing the bolts 105 and knobs 106 and inserting them from the opposite side.

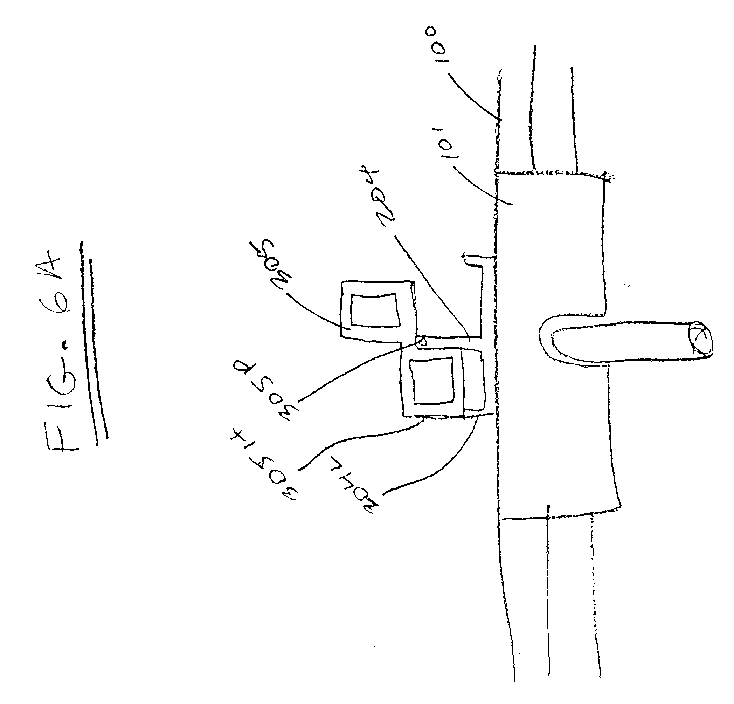

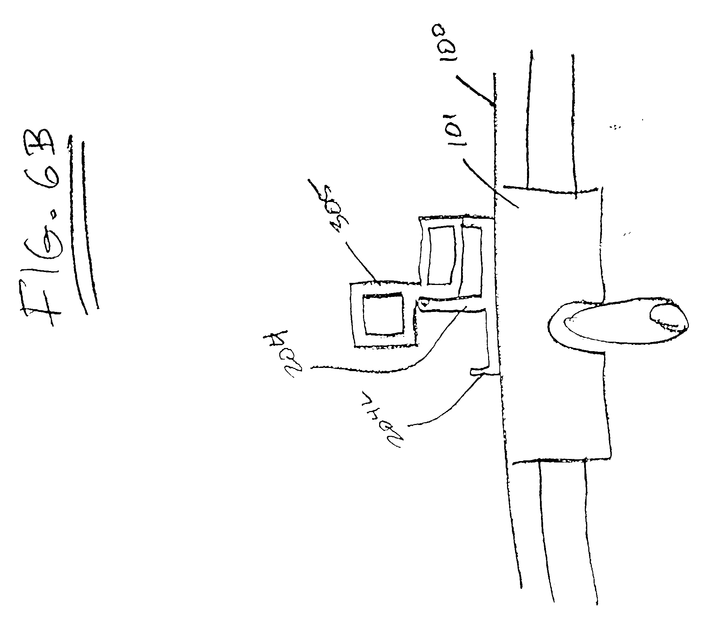

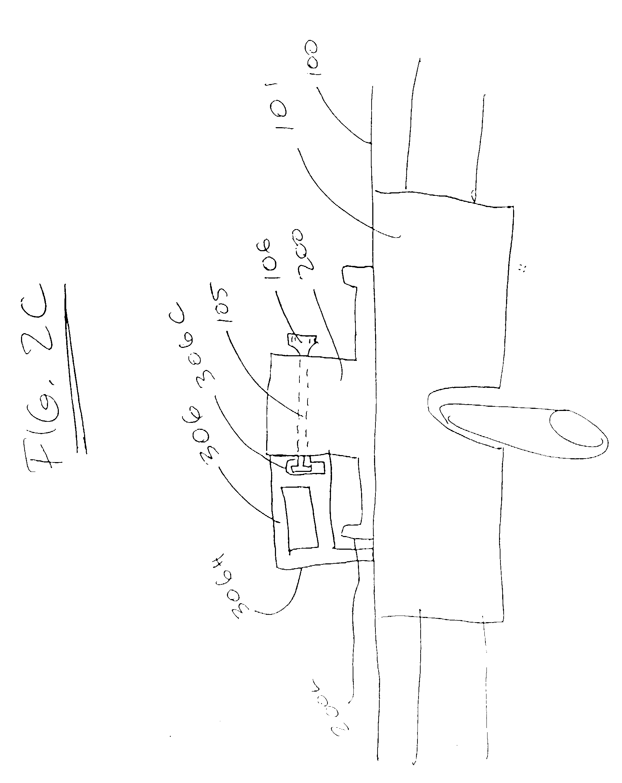

FIGS. 6A and 6B illustrate the eigth embodiment of the present invention. Referring to FIG. 6A, fence beam 204 has sideward extensions which provide a low profile work supporting surfacc 204L. A fence face 305 is rotatably attached to fence beam 204 via pivot pin 305P.

Fence face 305 has a work supporting surface 305H to provide the high profile. The work supporting surface 305H may combine with the low profile surface 204L to provide a high profile work supporting surface. Preferably, the surfaces 204L and 305H are substantially coplanar. Persons skilled in the art will recognize that fence face 305 may be adapted so that surface 305H contacts table 100. It is preferable that fence face 305 is vertically adjustable to ensure that surfaces 204L and 305H are substantially coplanar or that fence face 305 contacts table 100, leaving no gap therebetween.

In order to obtain the low profile surface, the user need only rotate fence face 305 about pin 305P, as shown in FIG. 6B. The user can then easily wrap his fingers around the surface 204L.

It is preferable to make fence beam 204 and fence face 305 longitudinally symmetrical, so that high profile surfaces 305H can be easily obtained on both sides of beam 204.

Persons skilled in the art may also recognize other alternatives to the means disclosed herein. However, all these additions and/or alterations are considered to be equivalents of the present invention.

## Claims

1. A fence comprising:
a fence beam having a workpiece supporting surface; and
a fence face disposed on the fence beam and having a workpiece supporting surface;
wherein the workpiece supporting surface of one of the fence beam and fence face provides a low profile and the workpiece supporting surface of the other of the fence beam and fence face provides a high profile.

2. The fence of Claim 1, wherein the workpiece supporting surface fence beam provides the low profile, and the workpiece supporting surface of the fence face provides the high profile.

3. The fence of Claim 2, wherein the workpiece supporting surface of the fence face is substantially coplanar with the workpiece supporting surface of the fence beam.

4. The fence of Claim 1, wherein the fence face is be rotatably supported by the fence beam.

5. The fence of Claim 4, wherein the fence face may be rotated out of engagement of a workpiece.

6. The fence of Claim 1, wherein the fence face has a channel.

7. The fence of Claim 6, wherein a holding strip is disposed within the channel.

8. The fence of Claim 7, wherein a bolt disposed on the fence beam is connected to the holding strip for holding the fence face in place.

9. The fence of Claim 1, wherein a bolt holds the fence face in place relative to the fence beam.

10. The fence of Claim 1, wherein the work supporting surfaces of the fence beam and the fence face provide in combination the high profile.

11. The fence of Claim 1, wherein the fence beam is longtidunally symmetrical.

12. The fence of Claim 1, wherein the fence beam has a second work supporting surface.

13. The fence of Claim 12, wherein the second work supporting surface is exposed when the fence face is disposed on the fence beam.

14. A method for using a fence having low profile and high profile work supporting surfaces, the method comprising:
providing a fence comprising a fence beam having a workpiece supporting surface, and a fence face disposcd on the fence beam and having a workpiece supporting surfacc, the workpiece supporting surface of one of the fence beam and fence face providing a low profile and the workpiece supporting surface of the other of the fence beam and fence face providing a high profile; and
removing the work supporting surface of the fence face.

15. The method of Claim 14, wherein the removing step comprises rotating the fence face.

16. The method of Claim 14, wherein the removing step comprises removing the fence face from the fence beam.
